# EUROPEAN PATENT APPLICATION

(11) **EP 4 546 797 A1**
(43) Date of publication of application: **30.04.2025**
(21) Application number: 23838837.5
(22) Date of filing: 06.07.2023
(51) Int. Cl.: H04N 21/41, G06F 3/14

(54) **MIRRORING PICTURE PROCESSING METHOD AND RELATED APPARATUS**

(30) Priority: 14.07.2022 CN 202210826268
(71) Applicant: Huawei Technologies Co., Ltd., Shenzhen, Guangdong 518129 (CN)
(72) Inventor: CHENG, Xiaobo, Shenzhen, Guangdong 518129 (CN); HU, Shiyao, Shenzhen, Guangdong 518129 (CN); ZHANG, Yingying, Shenzhen, Guangdong 518129 (CN)
(74) Representative: Gill Jennings & Every LLP
(86) International application number: PCT/CN2023/106092
(87) International publication number: WO 2024/012345

(57) **Abstract**

A projection image processing method and a related apparatus are provided. The method includes: determining, from a first device and a second device based on a computing performance parameter of the first device and a computing performance parameter received from the second device, a target device used to compute black border data, where the second device is configured to perform projection display on a projection image from the first device, the computing performance parameter of the first device indicates a computing capability of the first device, and the computing performance parameter of the second device indicates a computing capability of the second device; when the target device is the first device, computing, by the first device, the black border data based on a first projection image, where the first projection image is a projection image to be displayed on the second device, and the black border data indicates a black border area in the first projection image; and sending the first projection image and the black border data to the second device. In this way, detection duration is shortened, detection efficiency is improved, and user experience is further improved.

## Description

This application claims priority to Chinese Patent Application No. 202210826268.5, filed with the China National Intellectual Property Administration on July 14, 2022 and entitled "PROJECTION IMAGE PROCESSING METHOD AND RELATED APPARATUS", which is incorporated herein by reference in its entirety.

### TECHNICAL FIELD

This application relates to the terminal field, and in particular, to a projection image processing method and a related apparatus.

### BACKGROUND

With development of Internet technologies, terminal devices for video playing in a home are increasingly diversified, for example, include but are not limited to a television, a mobile phone, a computer, and a tablet. However, when a user views a video on a terminal device with a small display, for example, the mobile phone, there is a limitation. Therefore, the video is usually projected to a large screen like a television for viewing based on a projection technology. For example, the video on the mobile phone may be projected to the television for playing through screen mirroring, to improve viewing experience of the user.

During a projection process, there may be a black border area in a projection image, affecting viewing effect of the user. Therefore, the large screen needs to perform black border detection on the projection image to obtain black border data, crop a black border area, and display the projection image in a maximized manner in a horizontal or vertical direction. However, in some cases, a black border detection process may be time-consuming and low in detection efficiency. As a result, after the image is projected, it takes a long time for the image to be displayed, leading to poor user experience.

### SUMMARY

This application provides a projection image processing method and a related apparatus, to shorten duration of black border detection and improve black border detection efficiency, thereby improving user experience.

According to a first aspect, a projection image processing method is provided. The method may be performed by a first device, or may be performed by a component (for example, a chip or a chip system) configured in a first device, or may be implemented by a logical module or software that can implement all or some functions of a first device. This is not limited in this application.

For example, the method includes: determining, from the first device and a second device based on a computing performance parameter of the first device and a computing performance parameter received from the second device, a target device used to compute black border data, where the second device is configured to perform projection display on a projection image from the first device, the computing performance parameter of the first device indicates a computing capability of the first device, and the computing performance parameter of the second device indicates a computing capability of the second device; when the target device is the first device, computing the black border data based on a first projection image, where the first projection image is a projection image to be displayed on the second device, and the black border data indicates a black border area in the first projection image; and sending the first projection image and the black border data to the second device.

Based on the foregoing technical solution, the first device and the second device determine, based on the computing performance parameters, the target device used to compute the black border data, so that a computing capability of the selected target device is high. In this way, duration of computing the black border data is shortened, and black border detection efficiency is improved. For example, if the target device is the first device, the first device computes the black border data based on the first projection image, and sends the black border data to the second device, so that the second device performs cropping. Compared with that the second device directly performs black border detection on the first projection image to obtain the black border data, this helps shorten duration and improve detection efficiency, thereby improving user experience.

With reference to the first aspect, in some possible implementations of the first aspect, the sending the first projection image and the black border data to the second device includes: sending the first projection image and the black border data to the second device through a transport stream.

A black border data field may be added to the transport stream, to store the black border data. That is, the transport stream may include the first projection image and the corresponding black border data. In this way, the second device may directly receive the first projection image and the corresponding black border data, and does not need to perform black border detection on the first projection image. This helps greatly shorten duration for displaying an image after projection, and reduce a lag rate of a projection image displayed on the second device to an image displayed on the first device, that is, improve a synchronization rate of the images displayed on the first device and the second device, thereby improving user experience.

With reference to the first aspect, in some possible implementations of the first aspect, the first projection image is obtained based on a display image of the first device; before the computing the black border data based on a first projection image, the method further includes: performing black border detection on the display image to obtain a black border detection result, where the black border detection result indicates a black border area in the display image; and the computing the black border data based on a first projection image includes: obtaining the black border data through computing based on the black border detection result and a display ratio or resolution of the first projection image.

The first projection image is an image to be displayed on the second device. Because resolutions of the first device and the second device are different, a black border area is added to the display image of the first device, so that a resolution of an image to which the black border area is added is the same as the resolution of the second device. In this application, the first device may perform black border detection on the display image before adjusting the resolution of the display image of the first device, to obtain the black border detection result, and then obtains an entire black border area of the first projection image through computing with reference to the resolution of the second device. In this way, the first device detects the display image before the black border area is added, that is, detects only the black border area of the display image of the first device, thereby greatly reducing to-be-detected areas and improving detection efficiency.

With reference to the first aspect, in some possible implementations of the first aspect, before the determining, from the first device and a second device based on a computing performance parameter of the first device and a computing performance parameter received from the second device, a target device used to compute black border data, the method further includes: receiving first information from the second device, where the first information indicates whether the second device has performed black border detection; and determining, based on the first information, that the second device has not performed black border detection.

The first device determines, based on the received first information, whether the second device has performed black border detection. In this way, when the target device is determined, computing power of the second device may be comprehensively considered. For example, when the second device has performed black border detection, the first device may directly perform black border detection, which helps reduce computing load of the second device and improve detection efficiency. When the second device has not performed black border detection, the computing capabilities of the first device and the second device may be further evaluated. In this way, a device with a better computing capability may be selected for detection, thereby improving detection efficiency.

With reference to the first aspect, in some possible implementations of the first aspect, the determining, from the first device and a second device based on a computing performance parameter of the first device and a computing performance parameter received from the second device, a target device used to compute black border data includes: if the computing capability of the first device is higher than that of the second device, determining that the first device is the target device; or if the computing capability of the second device is higher than that of the first device, determining that the second device is the target device.

When the second device has not performed black border detection, the computing capabilities of the first device and the second device may be further evaluated, and a device with a better computing capability is selected for detection. This helps improve detection efficiency, and further helps an image to be displayed more quickly after being projected. In other words, a synchronization rate of images displayed on the first device and the second device is improved, thereby improving user experience.

With reference to the first aspect, in some possible implementations of the first aspect, when the target device is the second device, the method further includes: sending the first projection image to the second device, and skipping sending the black border data.

When the target device is the second device, the first projection image is sent to the second device, but the black border data is not sent, that is, the second device performs black border detection on the first projection image. In this way, with the computing capability of the first device and the computing capability of the second device comprehensively considered, the second device with a better computing capability is finally selected to perform black border detection, so that detection efficiency can be improved, thereby improving user experience.

According to a second aspect, a projection image processing method is provided. The method may be performed by a second device, or may be performed by a component (for example, a chip or a chip system) configured in a second device, or may be implemented by a logical module or software that can implement all or some functions of a second device. This is not limited in this application.

For example, the method includes: determining, from a first device and the second device based on a computing performance parameter of the second device and a computing performance parameter received from the first device, a target device used to compute black border data, where the second device is configured to perform projection display on a projection image from the first device, the computing performance parameter of the first device indicates a computing capability of the first device, and the computing performance parameter of the second device indicates a computing capability of the second device; and when the target device is the first device, receiving a first projection image and the black border data that are from the first device, where the black border data is obtained by the first device through computing based on the first projection image, the black border data indicates a black border area in the first projection image, and the first projection image is a projection image to be displayed on the second device.

Based on the foregoing technical solution, the first device and the second device determine, based on the computing performance parameters, the target device used to compute the black border data, so that a computing capability of the selected target device is high. This helps shorten duration of computing the black border data, and improve black border detection efficiency. For example, if the target device is the first device, the first device computes the black border data based on the first projection image, and sends the black border data to the second device. Correspondingly, the second device receives the first projection image and the black border data, to perform cropping. Compared with that the second device directly performs black border detection on the first projection image to obtain the black border data, this helps shorten duration and improve detection efficiency, so that the image can be quickly displayed after being projected, that is, a synchronization rate of images displayed on the first device and the second device is improved, thereby improving user experience.

With reference to the second aspect, in some possible implementations of the second aspect, the receiving a first projection image and the black border data that are from the first device includes: receiving the first projection image and the black border data through a transport stream.

A black border data field may be added to the transport stream, to store the black border data. That is, the transport stream may include the first projection image and the corresponding black border data. In this way, the second device may directly receive the first projection image and the corresponding black border data, and does not need to perform black border detection on the first projection image. This helps greatly shorten duration for displaying an image after projection, that is, improve a synchronization rate of images displayed on the first device and the second device, thereby improving user experience.

With reference to the second aspect, in some possible implementations of the second aspect, the method further includes: when a display image of the second device includes a plurality of projection images, determining whether the second device has performed black border detection; and the determining, from a first device and the second device based on a computing performance parameter of the second device and a computing performance parameter received from the first device, a target device used to compute the black border data includes: when determining that the second device has not performed black border detection, determining, from the first device and the second device based on the computing performance parameter of the second device and the computing performance parameter received from the first device, the target device used to compute the black border data.

When the display image of the second device includes the plurality of projection images, the second device may determine whether the second device has performed black border detection, and when the second device has not performed black border detection, the target device used to compute the black border data is determined from the first device and the second device based on the computing performance parameter of the second device and the computing performance parameter received from the first device. It may be understood that whether the second device has performed black border detection affects detection efficiency of the second device. For example, when the second device has performed black border detection, and then the second device performs black border detection, detection efficiency may be low. Therefore, in this application, when the target device is determined, whether the second device has performed black border detection is comprehensively considered. For example, when the second device has performed black border detection, the first device may directly perform black border detection, which helps reduce computing load of the second device and improve detection efficiency. When the second device has not performed black border detection, the computing capabilities of the first device and the second device may be further evaluated. In this way, a device with a better computing capability may be selected for detection, thereby improving detection efficiency.

With reference to the second aspect, in some possible implementations of the second aspect, the method further includes: sending first information to the first device, where the first information indicates whether the second device has performed black border detection.

With reference to the second aspect, in some possible implementations of the second aspect, the determining, from a first device and the second device based on a computing performance parameter of the second device and a computing performance parameter received from the first device, a target device used to compute black border data includes: if the computing capability of the first device is higher than that of the second device, determining that the first device is the target device; or if the computing capability of the second device is higher than that of the first device, determining that the second device is the target device.

From the first device and the second device, a device with a better computing capability is selected as the target device, and the target device performs black border detection. This helps shorten detection duration and improve detection efficiency, thereby improving user experience.

With reference to the second aspect, in some possible implementations of the second aspect, when the target device is the second device, the method further includes: receiving the first projection image from the first device; and performing black border detection on the first projection image to obtain the black border data.

When the target device is the second device, the second device receives the first projection image from the first device, but does not receive the black border data, that is, the second device performs black border detection on the first projection image. In this way, with the computing capability of the first device and the computing capability of the second device comprehensively considered, the second device with a better computing capability is finally selected to perform black border detection, so that detection efficiency can be improved, thereby improving user experience.

With reference to the second aspect, in some possible implementations of the second aspect, the method further includes: cropping the first projection image based on the black border data, to obtain and display a cropped projection image.

According to a third aspect, a projection image processing apparatus is provided, and may implement the method in the first aspect and any one of the possible implementations of the first aspect, or implement the method in the second aspect and any one of the possible implementations of the second aspect. The apparatus includes a corresponding module configured to perform the method. The module included in the apparatus can be implemented by software and/or hardware.

According to a fourth aspect, a projection image processing apparatus is provided, including a processor. The processor is coupled to a memory, and may be configured to execute a computer program in the memory, to implement the method according to the first aspect and any one of the possible implementations of the first aspect, or implement the method according to the second aspect and any one of the possible implementations of the second aspect.

Optionally, the apparatus further includes the memory.

Optionally, the apparatus further includes a communication interface, and the processor is coupled to the communication interface.

According to a fifth aspect, a computer-readable storage medium is provided. The computer-readable storage medium stores a computer program or instructions. When the computer program or the instructions are executed, the method according to the first aspect and any one of the possible implementations of the first aspect is implemented, or the method according to the second aspect and any one of the possible implementations of the second aspect is implemented.

According to a sixth aspect, a computer program product is provided. The computer program product includes instructions. When the instructions are run, the method according to the first aspect and any one of the possible implementations of the first aspect is implemented, or the method according to the second aspect and any one of the possible implementations of the second aspect is implemented.

According to a seventh aspect, a chip system is provided. The chip system includes at least one processor, configured to support implementation of the function in the first aspect or any one of the possible implementations of the first aspect; or configured to support implementation of the function in the second aspect and any one of the possible implementations of the second aspect, for example, receiving or processing data in the foregoing method.

In a possible design, the chip system further includes a memory, the memory is configured to store program instructions and data, and the memory is located inside or outside the processor.

The chip system may include a chip, or may include a chip and another discrete component.

It should be understood that the third aspect to the seventh aspect of embodiments of this application correspond to the technical solutions of the first aspect and the second aspect of this application, and beneficial effects achieved by the aspects and corresponding feasible implementations are similar. Details are not described again.

### BRIEF DESCRIPTION OF DRAWINGS

FIG. 1 is a diagram of a structure of an electronic device according to an embodiment of this application;
FIG. 2 is a diagram of an architecture of a system to which a method according to an embodiment of this application is applicable;
FIG. 3 is a schematic flowchart of an existing projection process according to an embodiment of this application;
FIG. 4 is a diagram of a module relationship between devices according to an embodiment of this application;
FIG. 5 is a schematic flowchart of a projection image processing method according to an embodiment of this application;
FIG. 6 is a diagram of a single-channel projection method according to an embodiment of this application;
FIG. 7 is a diagram of a dual-channel projection method according to an embodiment of this application; and
FIG. 8 is a schematic flowchart of a projection process according to an embodiment of this application.

### DESCRIPTION OF EMBODIMENTS

The following describes technical solutions of this application with reference to accompanying drawings.

The method provided in embodiments of this application may be applied to an electronic device, for example, a mobile phone, a television, a tablet computer, a smartwatch, a wearable device, an in-vehicle device, an augmented reality (augmented reality, AR)/virtual reality (virtual reality, VR) device, a notebook computer, a personal computer (personal computer, PC), an ultra-mobile personal computer (ultra-mobile personal computer, UMPC), a netbook, a personal digital assistant (personal digital assistant, PDA), and a distributed device. A specific type of the electronic device is not limited in embodiments of this application.

The wearable device may also be referred to as an intelligent wearable device, and is a general term of wearable devices that are intelligently designed and developed for daily wear by using a wearable technology, for example, a smart watch and a smart band. The wearable device is a portable device that can be directly worn on a body or integrated into clothes or an accessory of a user. The wearable device is not only a hardware device, but also implements a powerful function through software support, data exchange, and cloud interaction. In a broad sense, intelligent wearable devices include full-featured and large-size devices that can implement complete or partial functions without depending on smartphones, for example, smart watches or smart glasses, and devices that dedicated to only one type of application and need to be used together with other devices such as smartphones, such as various smart bands or smart jewelry used for monitoring physical signs.

In addition, the method provided in embodiments of this application may support an operating environment like a Linux operating system, an Android operating system (Android operating system, Android OS), a HarmonyOS (Harmony OS), a Mac operating system, an iOS, Windows, and a lightweight operating system (like LiteOS). This is not limited in embodiments of this application.

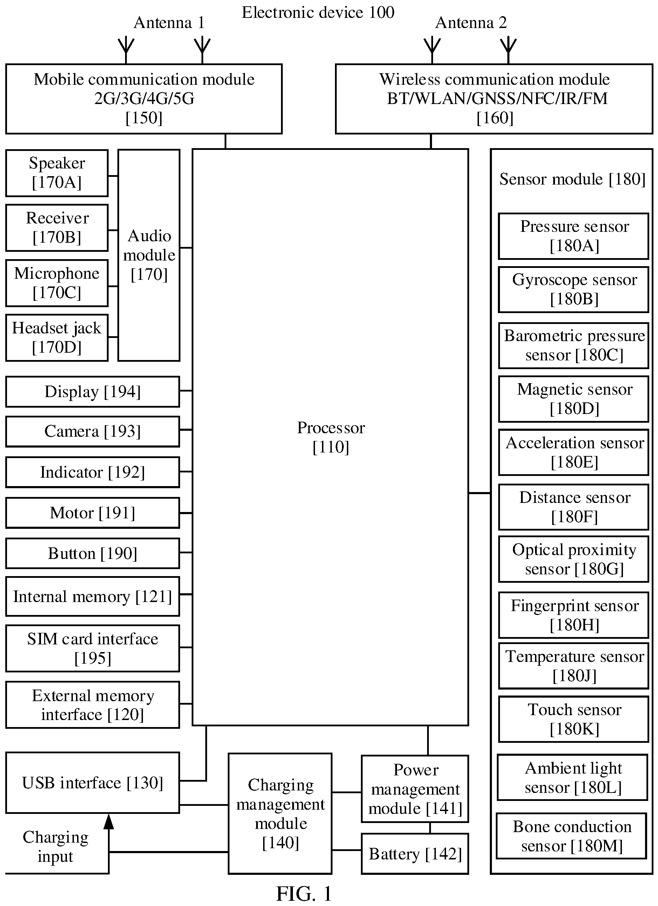

For example, FIG. 1 is a diagram of a structure of an electronic device 100. As shown in FIG. 1, the electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include one or more of an application processor (application processor, AP), a microcontroller unit (microcontroller unit, MCU), a modem processor, a graphics processing unit (graphics processing unit, GPU), an image signal processor (image signal processor, ISP), a controller, a memory, a video codec, a digital signal processor (digital signal processor, DSP), a baseband processor, and a neural-network processing unit (neural-network processing unit, NPU). Different processing units may be independent components, or may be integrated into one or more processors.

The application processor outputs a sound signal through the audio module 170 (for example, the speaker 170A), or displays an image or a video on the display 194.

The controller may be a nerve center and a command center of the electronic device 100. The controller may generate an operation control signal based on an instruction operation code and a time sequence signal, to complete control of instruction reading and instruction execution.

A memory may be further disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The processor 110 may perform different operations by executing the instructions, to implement different functions. For example, the instructions may be instructions pre-stored in the memory before the device is delivered from a factory, or may be instructions read from a new application (application, APP) after a user installs the APP in a use process. This is not limited in embodiments of this application.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a secure digital input and output (secure digital input and output, SDIO) interface, a pulse code modulation (pulse code modulation, PCM) interface, a universal asynchronous receiver/transmitter (universal asynchronous receiver/transmitter, UART) interface, a universal synchronous/asynchronous receiver/transmitter (universal synchronous/asynchronous receiver/transmitter, USART), a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

It may be understood that an interface connection relationship between modules illustrated in this application is merely an example for description, and does not constitute a limitation on the structure of the electronic device 100. In some other embodiments, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB interface 130. In some embodiments of wireless charging, the charging management module 140 may receive a wireless charging input through a wireless charging coil of the electronic device 100. The charging management module 140 supplies power to the electronic device through the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the external memory, the display 194, the camera 193, the wireless communication module 160, and the like. The power management module 141 may further be configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution that is applied to the electronic device 100 and that includes a 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transfers the low-frequency baseband signal obtained through demodulation to the baseband processor for processing. After being processed by the baseband processor, the low-frequency baseband signal is transferred to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the electronic device 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, the antenna 1 and the mobile communication module 150 in the electronic device 100 are coupled, and the antenna 2 and the wireless communication module 160 in the electronic device 100 are coupled, so that the electronic device 100 can communicate with a network and another device by using a wireless communication technology.

The electronic device 100 may implement a display function through the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. In some embodiments, the electronic device 100 may include one or more displays 194.

The electronic device 100 may implement an image shooting function through the camera 193, the ISP, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected to the photosensitive element. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into a standard image signal in a format such as RGB or YUV. In some embodiments, the electronic device 100 may include one or more cameras 193.

The digital signal processor is configured to process a digital signal, and may process another digital signal in addition to the digital image signal. For example, when the electronic device 100 selects a frequency, the digital signal processor is configured to perform Fourier transformation on frequency energy.

The video codec is configured to compress or decompress a digital video. The electronic device 100 may support one or more video codecs. In this way, the electronic device 100 may play or record videos in a plurality of encoding formats.

The external memory interface 120 may be used to connect to an external storage card, for example, a micro SD card, to extend a storage capability of the electronic device 100. The external memory card communicates with the processor 110 through the external memory interface 120, to implement a data storage function. For example, a music file or a video file is stored in the external storage card.

The internal memory 121 may be configured to store computer-executable program code. The executable program code includes instructions. The processor 110 runs the instructions stored in the internal memory 121, to perform various function applications of the electronic device 100 and data processing. The internal memory 121 may include a program storage area and a data storage area. The program storage area may store an operating system, an application required by at least one function (for example, a sound playing function or an image playing function), and the like. The data storage area may store data (for example, audio data or an address book) and the like created when the electronic device 100 is used. In addition, the internal memory 121 may include a high-speed random access memory, or may include a nonvolatile memory, for example, at least one magnetic disk storage device and a flash memory.

The electronic device 100 may implement an audio function by using the audio module 170, the speaker 170A, the receiver 170B, the microphone 170C, the headset jack 170D, the application processor, and the like, for example, music playing and sound recording.

The audio module 170 is configured to convert digital audio information into an analog audio signal for output, and is further configured to convert analog audio input into a digital audio signal. The audio module 170 may be further configured to: encode and decode an audio signal.

The speaker 170A, also referred to as a "loudspeaker", is configured to convert an audio electrical signal into a sound signal. The electronic device 100 may be used to listen to music or answer a call in a hands-free mode over the speaker 170A.

The receiver 170B, also referred to as an "earpiece", is configured to convert an audio electrical signal into a sound signal. When a call is answered or speech information is received through the electronic device 100, the receiver 170B may be put close to a human ear to listen to a voice.

The microphone 170C, also referred to as a "mike" or a "mic", is configured to convert a sound signal into an electrical signal.

The headset jack 170D is configured to connect to a wired headset.

The button 190 includes a power button (or referred to as a power-on button), a volume button, and the like.

The motor 191 may generate a vibration prompt. The motor 191 may be configured to provide an incoming call vibration prompt and a touch vibration feedback.

The indicator 192 may be an indicator light, and may be configured to indicate a charging status and a power change, or may be configured to indicate a message, a missed call, a notification, and the like.

The SIM card interface 195 is configured to connect to a SIM card. The electronic device 100 interacts with a network through the SIM card, to implement functions such as calling and data communication. In some embodiments, the electronic device 100 uses an eSIM, that is, an embedded SIM card. The eSIM card may be embedded into the electronic device 100, and cannot be separated from the electronic device 100.

It should be understood that the structure shown in this application does not constitute a specific limitation on the electronic device 100. In some other embodiments, the electronic device 100 may include more or fewer components than those shown in the figure, or some components may be combined, or some components may be split, or different component arrangements may be used. The components shown in the figure may be implemented by hardware, software, or a combination of software and hardware.

It should be further understood that the first device, the second device, and the like in embodiments of this application may be an electronic device having the structure shown in FIG. 1, or an electronic device having more or fewer components than those shown in the figure. This is not limited in embodiments of this application.

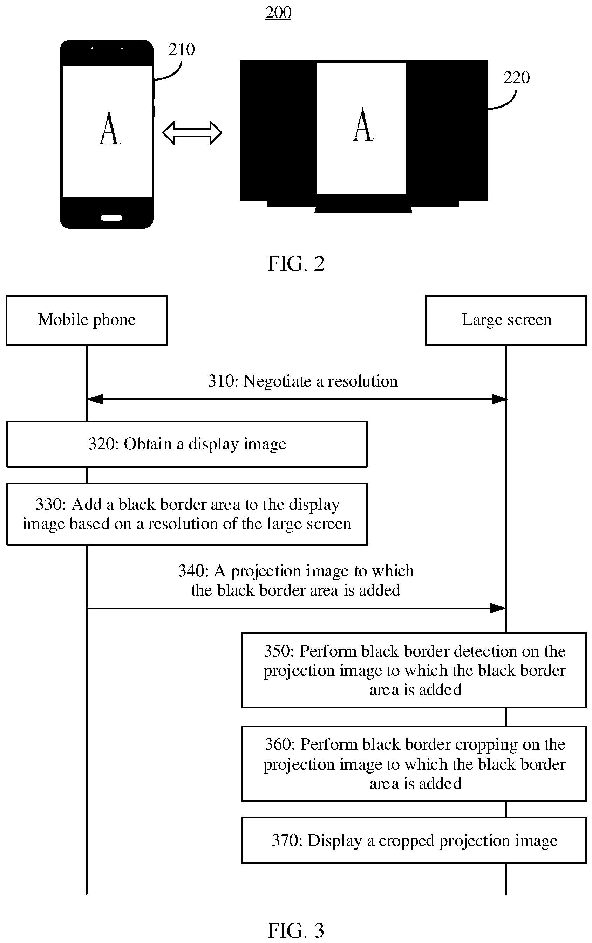

FIG. 2 is a diagram of an architecture of a system 200 to which a method according to an embodiment of this application is applicable. As shown in FIG. 2, the system 200 includes an electronic device 210 and an electronic device 220. The electronic device 220 is configured to perform projection display on a projection image from the electronic device 210. The electronic device 210 may be denoted as a source end, and the electronic device 220 may be denoted as a receive end. The electronic device 210 and the electronic device 220 may be electronic devices of different types, or may be electronic devices of a same type. For example, the electronic device 210 may be a mobile phone or another electronic device, for example, a tablet, that is not shown in the figure. The electronic device 220 may be a television or another device that is not shown in the figure. Specific types of the electronic device 210 and the electronic device 220 are not limited in embodiments of this application. The electronic device 210 may project, to the electronic device 220, an image displayed on the electronic device 210, to improve viewing experience. For example, the electronic device 210 may transmit, to the electronic device 220 through a communication channel established between the electronic devices, a video that is being played on the electronic device 210.

It should be understood that FIG. 2 is merely an example, and shows one source end and one receive end. This should not constitute any limitation on this application. There may be one or more of the devices. For example, a plurality of source ends may project projection images to a receive end. For example, the system shown in FIG. 2 further includes an electronic device, and the electronic device and the electronic device 210 project display images of the electronic device and the electronic device 210 to the electronic device 220.

It should be further understood that, in this application, a large screen may be an electronic device having a large display, for example, may include but is not limited to a television or a tablet computer. In this application, the large screen is configured to perform projection display on a display interface from a first device (for example, a mobile phone).

In the scenario shown in FIG. 2, to improve viewing experience for a projection image, black border detection and cropping need to be performed on the projection image, and the electronic device 220 displays a cropped projection image. Currently, the electronic device 220 (for example, a large screen) directly performs black border detection on the projection image, crops a black area, and displays the projection image in a maximized manner in a horizontal or vertical direction.

FIG. 3 is a schematic flowchart of an existing projection process according to an embodiment of this application. The following describes a detailed projection process with reference to FIG. 3. In the method shown in FIG. 3, a receive end (for example, a large screen) performs black border detection. For example, a source end is a mobile phone. The source end is a provider of a projection image. In other words, the source end is configured to provide an image to be projected and displayed on the receive end, and the receive end is configured to perform projection display on the projection image from the source end.

Step 310: The mobile phone and the large screen negotiate a resolution.

Generally, a resolution of the mobile phone is different from a resolution of the large screen. According to a standard projection protocol, the mobile phone needs to adjust and adapt to the resolution of the large screen. A black border area is filled to form a projection image of a corresponding ratio, so that the projection image received by the large screen has a same resolution as the large screen.

Optionally, the resolution may alternatively be replaced with a display ratio, and there is a correspondence between the resolution and the display ratio. The mobile phone may alternatively obtain a display ratio of the large screen, to adjust a display interface of the mobile phone to adapt to the display ratio of the large screen.

For example, the mobile phone and the large screen may negotiate the resolution. For example, the large screen sends the resolution of the large screen to the mobile phone, so that the mobile phone fills a display image of the mobile phone based on the resolution of the large screen, for example, fills a black border area, to adapt to the resolution of the large screen. The mobile phone sends a resolution of the mobile phone to the large screen, so that the large screen obtains the resolution of the mobile phone. The mobile phone and the large screen may further negotiate a protocol type of data transmission, for example, a transmission control protocol (transmission control protocol, TCP) or a user datagram protocol (user datagram protocol, UDP). For a specific negotiation process, refer to a known technology. Details are not described herein again.

Step 320: The mobile phone obtains a display image.

The display image is an image that is displayed on the mobile phone and that is expected to be projected to the large screen.

Step 330: The mobile phone adds a black border area to the display image based on the resolution of the large screen.

The mobile phone adds the black border area to the display image based on the resolution of the large screen to adjust a resolution of the display image of the mobile phone to be the same as that of the large screen. A display image of the mobile phone to which the black border area is added may be referred to as a projection image. The projection image is an image to be displayed on the large screen and has a same resolution as the large screen.

It should be understood that when no black border area is added to the display image of the mobile phone, there may also be a black border area. In other words, the projection image to which the black border area is added includes the black border area added by the mobile phone and a black border area in the display image of the mobile phone. For example, an image displayed on the mobile phone includes a black border area 1. Because the resolution of the mobile phone is different from the resolution of the large screen, a black border area 2 is added to the display image of the mobile phone to adapt to the resolution of the large screen. Therefore, a projection image to which the black border area is added includes the black border area 1 and the black border area 2.

Step 340: The mobile phone sends, to the large screen, the projection image to which the black border area is added.

Correspondingly, the large screen receives, from the mobile phone, the projection image to which the black border area is added.

Step 350: The large screen performs black border detection on the projection image to which the black border area is added.

Step 360: The large screen performs black border cropping on the projection image to which the black border area is added.

The large screen may determine a proper black border cropping policy, namely, a black border to be cropped and a size of a black border area to be cropped, based on an actual application scenario, to obtain the cropped projection image.

Step 370: The large screen displays the cropped projection image.

It can be learned from the foregoing that black border detection is directly performed by the large screen to obtain black border data. However, in some special scenarios, the foregoing process is time-consuming and low in efficiency. As a result, a lag rate of a projection image displayed on a second device is higher than a lag rate of an image displayed on the first device, that is, a synchronization rate of images displayed on the first device and the second device is low, causing poor user experience.

To resolve the foregoing problem, this application provides a projection image processing method. Based on computing performance parameters of the first device and the second device, a target device used to compute black border data is determined from the first device and the second device. It is assumed that the target device is the first device, and the first device computes the black border data based on a projection image to be displayed on the second device, and sends the black border data to the second device. In this way, in comparison with a solution in which the second device is directly selected to perform black border detection to obtain the black border data, in the solution provided in this application, when the target device used to compute the black border data is determined, computing capabilities of the first device and the second device are fully considered. This helps improve black border detection efficiency, shorten duration for obtaining the black border data through computing, and further improve user experience. Especially, when the display image of the second device includes a plurality of projection images, this helps reduce computing load of the second device, and effectively avoids low detection efficiency caused by high load of the second device.

Before the method provided in embodiments of this application is described, the following descriptions are first provided.

First, to clearly describe the technical solutions in embodiments of this application, terms such as "first" and "second" are used in embodiments of this application to distinguish between same items or similar items that provide basically same functions. For example, a first device and a second device are merely used to distinguish between different devices, and do not limit a sequence thereof. A person skilled in the art may understand that the terms such as "first" and "second" do not limit a quantity or an execution sequence, and the terms such as "first" and "second" do not indicate a definite difference.

Second, the terms "include", "have" and any other variants mean to cover the non-exclusive inclusion, for example, a process, method, system, product, or device that includes a series of steps or units is not necessarily limited to those steps or units that are expressly listed, but may include other steps or units not expressly listed or inherent to such a process, method, system, product, or device.

Third, in embodiments of this application, "a plurality of" means two or more. "At least one of the following items" or a similar expression thereof refers to any combination of these items, including any combination of a single item or a plural item. For example, one or more of a, b, or c may represent the following cases: a, b, c, a and b, a and c, b and c, or a, b and c.

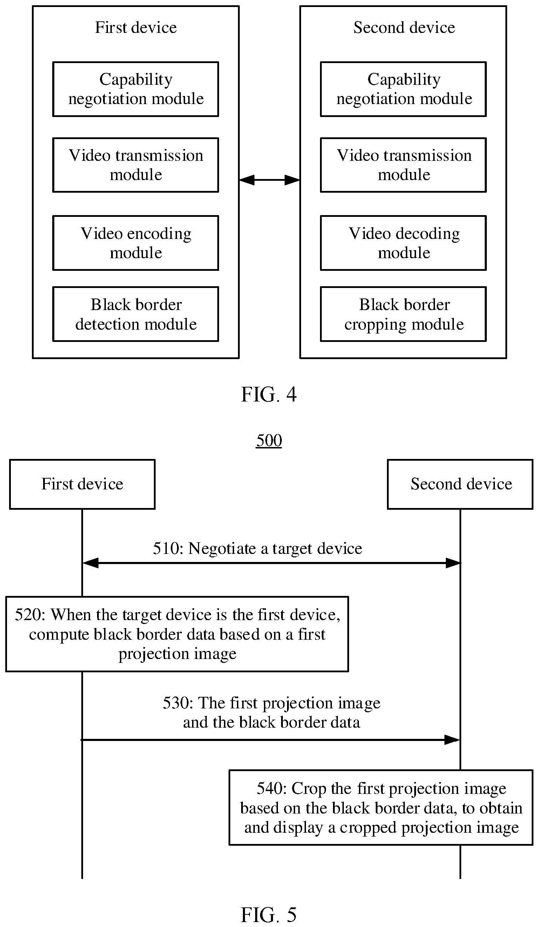

Before the projection image processing method provided in this application is described, functional modules included in a device applicable to the method provided in this application are described in detail with reference to FIG. 4.

FIG. 4 is a diagram of a module relationship between devices according to an embodiment of this application.

As shown in FIG. 4, a first device includes a capability negotiation module, a video transmission module, a video encoding module, and a black border detection module. The capability negotiation module may be configured to negotiate a black border detection capability, for determining, based on computing capabilities of the first device and a second device, whether it is the first device or the second device to perform black border detection. It should be understood that the capability negotiation module may be further configured to perform transmission protocol negotiation, resolution negotiation, and the like. This is not limited in embodiments of this application. The video transmission module is configured to transmit a projection image and/or black border data. The video encoding module is configured to encode the projection image. The black border detection module is configured to perform black border detection on the projection image.

The second device includes a capability negotiation module, a video transmission module, a video decoding module, and a black border cropping module. The capability negotiation module may be configured to negotiate a black border detection capability, for determining, based on computing capabilities of the first device and the second device, whether it is the first device or the second device to perform black border detection. It should be understood that the capability negotiation module may be further configured to perform transmission protocol negotiation, resolution negotiation, and the like. This is not limited in embodiments of this application. The video transmission module is configured to transmit a projection image and/or black border data. The video coding module is configured to decode a received projection image and/or received black border data to obtain the projection image and/or black border data. The black border cropping module is configured to crop the projection image based on the black border data, for displaying a cropped projection image.

It should be understood that the structure of the first device and the structure of the second device shown in FIG. 4 are merely examples, and should not constitute any limitation on embodiments of this application. For example, the second device may further include a black border detection module, configured to perform black border detection on the projection image when the computing capability of the second device is higher than the computing capability of the first device. For another example, the second device may further include a display module, configured to display the cropped projection image. For another example, the first device may further include a display module, configured to display an image, a video, and the like. Specific structures of the mobile phone and a large screen are not limited in embodiments of this application.

The following describes in detail a projection image processing method provided in embodiments of this application with reference to the accompanying drawings.

It should be understood that the following embodiments describe the method from a perspective of interaction between the first device and the second device. The first device (which may be understood as a source end of a projection image) may be, for example, the electronic device 210 (for example, a mobile phone) shown in FIG. 2, and the second device (which may be understood as a receive end of the projection image, namely, a device that finally displays the projection image) may be, for example, the electronic device 220 (for example, a large screen) shown in FIG. 2.

It should be further understood that, although the embodiments shown below are described through interaction between the first device and the second device as an example, this should not constitute any limitation on an execution subject of the method. The method provided in embodiments of this application can be performed provided that a program that records code of the method provided in embodiments of this application can be run. For example, the first device may be replaced with a component (for example, a chip or a chip system) disposed in the first device, or another functional module that can invoke a program and execute the program. The second device may be replaced with a component (for example, a chip or a chip system) disposed in the second device, or another functional module that can invoke a program and execute the program. This is not limited in embodiments of this application.

FIG. 5 is a schematic flowchart of a projection image processing method 500 according to an embodiment of this application. The method 500 shown in FIG. 5 may include step 510 to step 540. The following describes each step in the method 500 in detail.

Step 510: A first device negotiates with a second device about a target device.

The second device is configured to perform projection display on a projection image from the first device, and the target device is a device that is determined from the first device and the second device and that is used to compute black border data.

In a possible implementation, the first device receives a computing performance parameter from the second device, and determines, from the first device and the second device based on a computing performance parameter of the first device and the computing performance parameter received from the second device, the target device used to compute the black border data, where the computing performance parameter of the first device indicates a computing capability of the first device, and the computing performance parameter of the second device indicates a computing capability of the second device.

In another possible implementation, the second device receives a computing performance parameter from the first device, and determines, from the first device and the second device based on a computing performance parameter received from the first device and a computing performance parameter of the second device, a target device used to compute the black border data, where the computing performance parameter of the first device indicates a computing capability of the first device, and the computing performance parameter of the second device indicates a computing capability of the second device.

Optionally, the computing performance parameter of the first device includes but is not limited to: whether the first device has a black border detection capability, a computing rate of the first device, and the like; and the computing performance parameter of the second device includes but is not limited to: whether the second device has a black border detection capability, a computing rate of the second device, and the like.

It may be understood that the computing performance parameter may indicate a computing capability. For example, if the first device has the black border detection capability, and the second device does not have the black border detection capability, the computing capability of the first device is higher than that of the second device, and the target device is the first device. Similarly, if the first device does not have the black border detection capability, and the second device has the black border detection capability, the computing capability of the second device is higher than that of the first device, and the target device is the second device. For another example, if both the first device and the second device have the black border detection capability, and the computing rate of the first device is higher than the computing rate of the second device, the computing capability of the first device is higher than the computing capability of the second device, and the target device is the first device. Similarly, if both the first device and the second device have the black border detection capability, and the computing rate of the second device is higher than the computing rate of the first device, the computing capability of the second device is higher than the computing capability of the first device, that is, the target device is the second device.

It should be understood that, when the computing capability of the first device is the same as the computing capability of the second device, the first device may be preferentially determined as the target device.

It should be further understood that determining the target device based on the computing capabilities of the first device and the second device is merely an example, and should not constitute any limitation on embodiments of this application. For example, the first device may further determine the target device based on a relationship between the computing performance parameter of the first device and a preset threshold. For example, when the computing performance parameter of the first device is greater than the preset threshold, the first device determines the first device as the target device.

Optionally, the first device and the second device may further negotiate a resolution, a transmission protocol, whether the second device has performed black border detection, and the like. Whether the second device has performed black border detection may reflect load of the second device. For example, if the second device has performed black border detection, it may be considered that the load of the second device is high and the second device is not suitable to be determined as the target device. If the second device has not performed black border detection, it may be considered that the load of the second device is low, and it may be further considered whether to determine the second device as the target device. In addition, specific content negotiated between the first device and the second device is not limited in embodiments of this application. For example, the second device may send a resolution, the computing performance parameter, and the like of the second device to the first device, and the first device may send a resolution, the computing performance parameter, and the like of the first device to the second device.

Step 520: When the target device is the first device, the first device computes the black border data based on a first projection image.

The first projection image is a projection image to be displayed on the second device, and the black border data indicates a black border area in the first projection image.

The first device and the second device negotiate the target device. In one case, the target device is the first device, for example, the computing capability of the first device is higher than the computing capability of the second device. In another case, the target device is the second device, for example, the computing capability of the second device is higher than the computing capability of the first device. When the target device is the second device, the second device performs black border detection on the first projection image to obtain the black border data. For a specific process, refer to related descriptions in FIG. 3. Details are not described herein again. The following describes in detail a case in which the target device is the first device.

In a possible implementation, when the target device is the first device, the first device computes the black border data based on the first projection image, that is, computes the black border data based on the projection image to be displayed on the second device. The first projection image may be a projection image obtained after the first device adds a black border area to a display image of the first device to adapt to the resolution or a display ratio of the second device, or may be a projection image obtained when the resolutions (or display ratios) of the first device and the second device are the same, and no black border area is added to a display image of the first device. This is not limited in embodiments of this application.

For example, when the target device is the first device, the first device performs black border detection on the display image of the first device to obtain a black border detection result, where the black border detection result indicates a black border area in the display image of the first device. Further, the first device obtains the black border data through computing based on the black border detection result and a display ratio or resolution of the first projection image. For example, the resolution of the first device is 800×480, and the resolution of the second device is 1920×1080. The first device performs black border detection on the display image of the first device to obtain the black border detection result. For example, upper and lower edges of the black border area are 50, and left and right edges of the black border area are 100. Further, to adapt to the resolution of the second device, the first device needs to supplement a black border area. Therefore, the first projection image obtained after the resolution is adapted includes the added black border area and the black border area in the display image of the first device. The final black border data indicates a black border area in the first projection image. The first device obtains the black border data through computing based on the resolution of the second device. It should be understood that sizes of the upper edge, the lower edge, the left edge, and the right edge of the black border area are merely examples, and should not constitute any limitation on embodiments of this application. For example, the upper edge and the lower edge may be different, and the left edge and the right edge may also be different.

The following shows a specific method of black border detection.

For example, a width and a height of an image are determined based on a resolution, and then black border detection is performed on the image from outside to inside. Assuming that the resolution is 800×480, coordinates of an upper left corner of the image is (0, 0), coordinates of an upper right corner of the image is (800, 0), coordinates of a lower left corner of the image is (0, 480), and coordinates of a lower right corner of the image is (800, 480). For example, x is used as a horizontal coordinate and y is used as a vertical coordinate, and an upper edge of the image is detected. Pixels in a row in which y=0 are first detected, and 800 pixels are included. If the 800 pixels are all black pixels, it is considered that the row in which y=0 is a black border area. If one or more of the 800 pixels are not black pixels, it is considered that the row in which y=0 is not a black border area. If the row in which y=0 is a black border area, pixels in a row in which y=1 are detected. Detection is performed in sequence until a row is not determined as a black border area. For example, detection is performed until one or more pixels in a row in which y=11 are not black pixels, the row is not determined as a black border area. In other words, an upper edge of a black border area of the image is 10. Similarly, a lower edge, a left edge, and a right edge of the black border area of the image may be obtained.

In addition, to improve detection efficiency, after the row in which y=0 is detected, the row in which y=10 may be directly detected. If all of the pixels in the row in which y=10 are black pixels, that is, the row in which y=10 is a black border area, a row in which y=20 may continue to be detected. Detection is performed in sequence in this manner. If the row in which y=10 is not a black border area, a range is continuously narrowed down for detection. For example, pixels in a row in which y=5 is detected. If one or more pixels in the row in which y=5 are not black pixels, the range is continuously narrowed down until all pixels in a row are black pixels. In this way, black border detection efficiency can be greatly improved.

The first device obtains that the upper edge of the black border area of the displayed image of the first device is 50, the lower edge is 40, the left edge is 100, and the right edge is 50, and computes a black border area of a to-be-displayed interface based on the resolution of the second device. For example, if the resolution of the second device is 1200×1000, coordinates of a central point of the image are (600, 500), and an edge size of a black border area that is added above is 600-400=200. In this case, with reference to the upper edge of the detected black area of the display image of the first device being 50, an upper edge of the final black border area is 50+200=250. Other edges are similar, and are not computed one by one herein.

Step 530: The first device sends the first projection image and the black border data to the second device. Correspondingly, the second device receives the first projection image and the black border data from the first device.

When the target device is the first device, after obtaining the black border data through computing, the first device sends the first projection image and the corresponding black border data to the second device, so that the second device crops the first projection image.

For example, the first device may send the first projection image and the black border data to the second device through a transport stream. In other words, the transport stream carries the first projection image and the black border data. For example, the first device and the second device may establish a data communication channel to transmit data, and the black border data is carried by adding a black border data field to the transmission stream.

It may be understood that, before sending the first projection image and the black border data, the first device may encode the first projection image, and send an encoded first projection image to the second device through the transport stream, where the transport stream further includes the black border data field, to carry the black border data. After receiving the transport stream (a video stream is used as an example), the second device decodes the transport stream to obtain the first projection image and the black border data.

Step 540: The second device crops the first projection image based on the black border data, to obtain and display a cropped projection image.

After obtaining the first projection image (that is, the projection image to be displayed on the second device) and the black border data, the second device may crop the first projection image based on the black border data. For example, the second device may crop the first projection image by formulating a proper cropping policy based on the black border data. For example, if a video includes a caption, the second device reserves an area for displaying the caption, and crops a remaining black border area. For another example, the second device may crop all of the black border area. This is not limited in this embodiment of this application. That the second device executes a proper cropping policy further includes determining, based on the resolution of the second device, a black border area that needs to be cropped, so that a ratio of a projection image obtained after the black border area is cropped is the same as the resolution of the second device.

Based on the foregoing technical solution, the first device and the second device determine, based on the computing performance parameters, the target device used to compute the black border data, so that a computing capability of the selected target device is high. In this way, duration of computing the black border data is shortened, and black border detection efficiency is improved. For example, if the target device is the first device, the first device computes the black border data based on the first projection image, and sends the black border data to the second device, so that the second device performs cropping. Compared with that the second device directly performs black border detection on the first projection image to obtain the black border data, this helps shorten duration and improve detection efficiency, so that the image can be quickly displayed after being projected, thereby improving user experience.

It should be understood that the solution described above may be further applied to a multi-channel projection scenario, that is, a display image of the second device includes a plurality of projection images (the plurality of projection images may come from different devices). The following describes the solution in the multi-channel projection scenario.

In the multi-channel projection scenario, before the determining, from the first device and the second device based on a computing performance parameter of the first device and a computing performance parameter received from the second device, a target device used to compute black border data, the method shown in FIG. 5 further includes: The first device receives first information from the second device, where the first information indicates whether the second device has performed black border detection. In other words, the second device needs to determine whether the second device has performed black border detection, and indicate, to the first device by using the first information, whether the second device has performed black border detection.

In a possible case, if the first device determines, based on the first information, that the second device has performed black border detection, the first device determines the first device as the target device. For example, a displayed image of a large screen includes a plurality of projection images, a first channel of projection image is a projection image from a mobile phone 1, and a second channel of projection image is a projection image from a mobile phone 2. The large screen determines that the large screen performs black border detection on the projection image from the mobile phone 1. In this case, the large screen indicates, to the mobile phone 2 by using first information, that the large screen has performed black border detection. The mobile phone 2 determines, based on the first information, that the large screen has performed black border detection. Further, the mobile phone 2 determines that the mobile phone 2 is a target device, that is, the mobile phone 2 computes black border data based on the projection image projected by the mobile phone 2 to the large screen. In other words, the mobile phone 2 performs black border detection.

In another possible case, if the first device determines, based on the first information, that the second device has not performed black border detection, the first device further determines, from the first device and the second device based on the computing performance parameter of the first device and the computing performance parameter of the second device, the target device used to compute the black border data. For example, if the computing capability of the first device is higher than that of the second device, the first device determines that the first device is the target device; or if the computing capability of the second device is higher than that of the first device, the first device determines that the second device is the target device. When determining that the second device is the target device, the first device may further indicate the second device to perform black border detection.

For example, a display image of a large screen includes a plurality of projection images, namely, a projection image from a mobile phone 1 and a projection image from a mobile phone 2. The large screen determines that the mobile phone performs black border detection on the projection image from the mobile phone 1. In this case, the large screen indicates, to the mobile phone 2 by using first information, that the large screen has not performed black border detection. The mobile phone 2 determines, based on the first information, that the large screen has not performed black border detection. Further, the mobile phone 2 determines a target device based on a computing performance parameter of the mobile phone 2 and a computing performance parameter of the large screen; and if a computing capability of the mobile phone 2 is higher than a computing capability of the large screen, determines the mobile phone 2 as the target device; or if a computing capability of the large screen is higher than a computing capability of the large screen, determines the large screen as the target device.

For another example, a display image of a large screen includes a plurality of projection images, namely, a projection image from a mobile phone 1, a projection image from a mobile phone 2, and a projection image from a mobile phone 3. The large screen determines that the mobile phone 1 performs black border detection on the projection image from the mobile phone 1, and the large screen performs black border detection on the projection image from the mobile phone 2. In this case, the large screen indicates, to the mobile phone 3 by using first information, that the large screen has performed black border detection. The mobile phone 3 determines, based on the first information, that the large screen has performed black border detection, and further determines the mobile phone 3 as the target device. In other words, the mobile phone 3 computes black border data based on the projection image projected by the mobile phone 3 to the large screen.

It should be understood that, in the foregoing two cases, the second device may alternatively determine the target device. In other words, the second device determines whether the second device has performed black border detection. If the second device has not performed black border detection, the second device further determines the target device based on the computing performance parameter from the first device and the computing performance parameter of the second device. If the second device has performed black border detection, the second device determines that the first device is the target device. In this case, the second device may further indicate the first device to perform black border detection.

It should be further understood that the second device may send the first information and the computing performance parameter together to the first device, that is, the first information and the computing performance parameter of the second device are carried in same signaling, or may separately send the first information and the computing performance parameter, that is, the first information and the computing performance parameter of the second device are carried in different signaling. This is not limited in embodiments of this application.

Based on the foregoing technical solution, in the multi-channel projection scenario, it is first determined whether the second device has performed black border detection. If the second device has not performed black border detection, the first device and the second device determine, based on the computing performance parameters, the target device used to compute the black border data, so that a computing capability of the selected target device is high. In this way, duration of computing the black border data is shortened, and black border detection efficiency is improved. If the second device has performed black border detection, the first device performs black border detection. In this way, computing load of the second device can be reduced, and the computing capability of the first device can be efficiently used, thereby improving black border detection efficiency. In this way, an image can be quickly displayed after being projected, that is, a synchronization rate of images displayed on the first device and the second device is improved, thereby improving user experience.

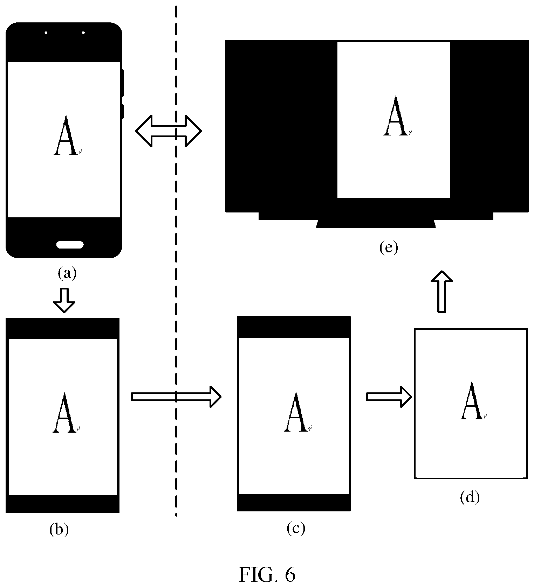

The following describes a single-channel projection method in embodiments of this application in detail with reference to FIG. 6.

FIG. 6 is a diagram of a single-channel projection method according to an embodiment of this application. As shown in FIG. 6, for example, the first device is a mobile phone and the second device is a large screen.

The mobile phone (as shown in (a) in the figure) projects a display image of the mobile phone to the large screen. Before projection, the mobile phone negotiates a computing capability with the large screen. For example, the mobile phone receives a computing performance parameter from the large screen, and compares the computing performance parameter of the large screen with a computing performance parameter of the mobile phone. If a computing capability of the mobile phone is higher than a computing capability of the large screen, the mobile phone performs black border detection; or if a computing capability of the large screen is higher than a computing capability of the mobile phone, the large screen performs black border detection. For a process of performing black border detection by the large screen, refer to a known technology. Details are not described herein again.

In the following, it is assumed that the mobile phone performs black border detection. The mobile phone obtains the display image of the mobile phone (as shown in (b) in FIG. 6) and performs black border detection on the current display image of the mobile phone, to obtain a black border detection result (as shown in a black area in (b) in FIG. 6).

(b) and (c) in FIG. 6 show a display image of the mobile phone that does not adapt to a resolution of the large screen (for example, in a scenario in which a resolution of the mobile phone is the same as the resolution of the large screen). The figure does not show a projection image to which a black border area is added by the mobile phone to adapt to the resolution of the large screen. However, this should not constitute any limitation on embodiments of this application. If the resolution of the mobile phone is different from the resolution of the large screen, the mobile phone performs black border detection on the display image of the mobile phone to obtain a black border detection result. Then, the mobile phone adds a black border area to the display image of the mobile phone based on the resolution of the large screen, to obtain a projection image that adapts to the resolution of the large screen (namely, an image to be displayed on the large screen), and obtains black border data through computing based on a resolution of the projection image and the black border detection result. The black border data indicates a black border area of the projection image.

Before sending the projection image, the mobile phone may encode the projection image (for example, the projection image may be a projection image to which a black border area is added when resolutions are different, or may be a projection image to which no black border area is added when resolutions are the same), and send the projection image to the large screen through a transport stream. In addition, the transport stream further carries the black border data, where the black border data indicates the black border area of the projection image.

In addition, the large screen decodes the received projection image and black border data, to obtain the black border data and the projection image (as shown in (c) in FIG. 6). (c) in FIG. 6 shows only a projection image to which no black border area is added, and does not show a projection image to which a black border area is added. However, this should not constitute any limitation on embodiments of this application.

Further, the large screen crops a black border of the projection image to obtain a cropped projection image (as shown in (d) in FIG. 6). The cropped projection image shown (d) in FIG. 6 is a projection image whose black border areas are cropped off. However, this should not constitute any limitation on embodiments of this application. For example, the large screen may alternatively crop off a part of the black border area, to obtain the cropped projection image. This is not limited in embodiments of this application.

Finally, the large screen displays the cropped projection image on the large screen (as shown in (e) in FIG. 6).

It may be understood that although (b) and (c) in FIG. 6 are the same, (b) in FIG. 6 shows a projection image before encoding on a mobile phone side, and (c) in FIG. 6 shows a projection image after decoding on a large screen side.

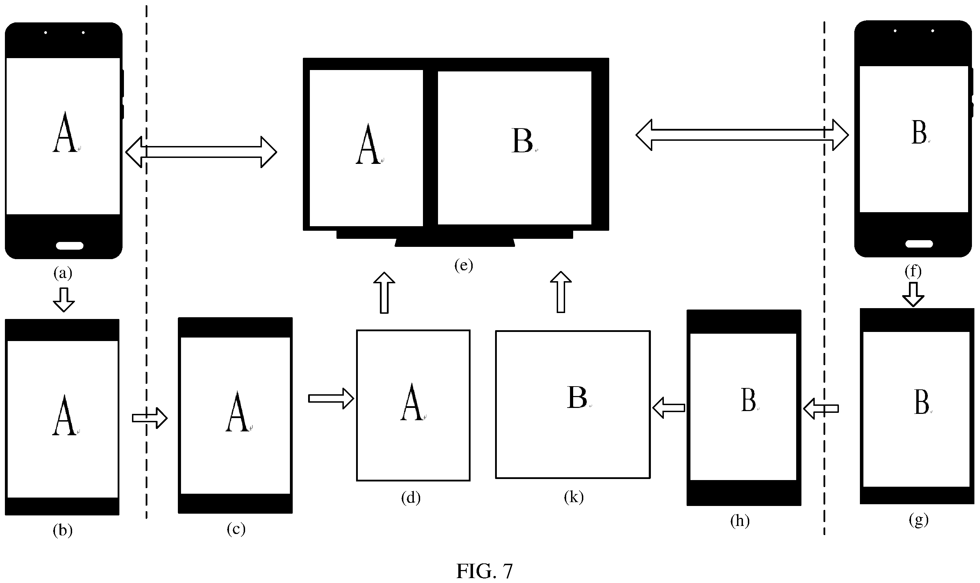

The following describes a projection method in embodiments of this application in detail with reference to FIG. 7. FIG. 7 is a dual-channel projection scenario, that is, a scenario in which a display image of a large screen includes a plurality of projection images, for example, display images of a plurality of mobile phones are projected to a same large screen.

FIG. 7 is a diagram of a dual-channel projection method according to an embodiment of this application. As shown in FIG. 7, a mobile phone on the left is denoted as a mobile phone 1, and a mobile phone on the right is denoted as a mobile phone 2. Assuming that the mobile phone 1 determines, through negotiation with a large screen, that the mobile phone 1 performs black border detection, the mobile phone 2 may determine through negotiation with the large screen, that the large screen performs black border detection, or the mobile phone 2 performs black border detection. It is assumed that the mobile phone 2 performs black border detection.

(a), (b), (c), (d), and (e) in FIG. 7 are diagrams of a process in which the mobile phone 1 projects a display image of the mobile phone to the large screen. For specific descriptions, refer to FIG. 6. Details are not described herein again. (f), (g), (h), (k), and (e) in FIG. 7 are diagrams of a process in which the mobile phone 2 projects a display image of the mobile phone to the large screen. For specific descriptions, refer to FIG. 6. Details are not described herein again.

It should be understood that, assuming that the mobile phone 1 determines, through negotiation with the large screen, that the large screen performs black border detection, the mobile phone 2 determines, through negotiation with the large screen, that because the large screen has performed black border detection on a projection image of the mobile phone 1, the mobile phone 2 performs black border detection on a projection image of the mobile phone 2.

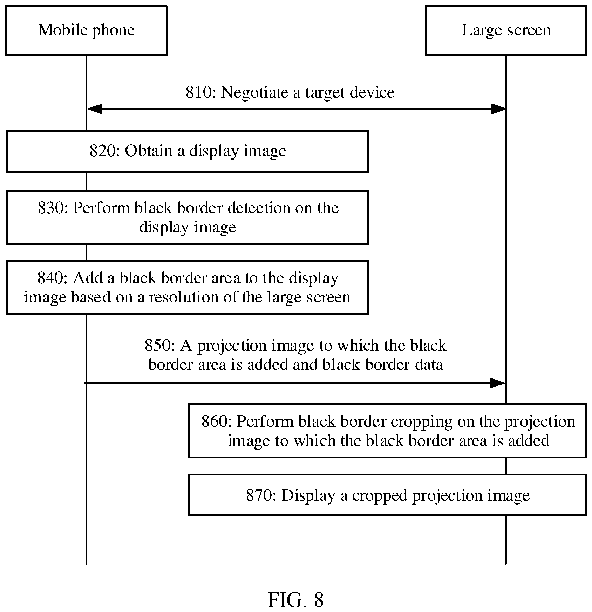

FIG. 8 is a schematic flowchart of a projection process in this application according to an embodiment of this application. In FIG. 8, for example, the first device is a mobile phone and the second device is a large screen.

As shown in FIG. 8, in this application, that the mobile phone projects a display image of the mobile phone to the large screen includes the following steps.

Step 810: The mobile phone and the large screen negotiate a target device.

In other words, the mobile phone and the large screen negotiate a device that performs black border detection.

Step 820: The mobile phone obtains a display image.

The display image is an image that is displayed on the mobile phone and that is expected to be projected to the large screen.

Step 830: The mobile phone performs black border detection on the display image.

The display image is an image displayed on the mobile phone, that is, a display image before a black border area is added based on the resolution of the large screen.

Step 840: The mobile phone adds a black border area to the display image based on a resolution of the large screen.

Step 850: The mobile phone sends, to the large screen, a projection image to which the black border area is added and black border data.

Correspondingly, the large screen receives, from the mobile phone, the projection image to which the black border area is added and the black border data. The black border data indicates all of a black border area in the projection image to which the black border area is added, including the added black border area and a black border area of the display image of the mobile phone.

Step 860: The large screen performs black border cropping on the projection image to which the black border area is added.

Step 870: The large screen displays a cropped projection image.

For steps of the method shown in FIG. 8, refer to related descriptions in FIG. 5. Details are not described herein again.

In conclusion, main differences between the projection method provided in this application and a known projection method (for the known projection method, refer to FIG. 3) are as follows.

Difference 1: In the conventional technology, a large screen directly performs black border detection without negotiating with a mobile phone. In this application, the mobile phone and the large screen negotiate whether it is the mobile phone or the large screen to perform black border detection. For example, the mobile phone and the large screen determine, based on computing performance, a device to perform black border detection. In this way, a computing capability of the mobile phone may be fully considered and used, which helps effectively use the computing capability of the mobile phone when a computing capability of the large screen is insufficient or low, thereby improving black border detection efficiency.

Difference 2: In the convention, black border detection is performed by the large screen, and is performed on a projection image that adapts to a resolution of the large screen, that is, black border detection is performed on a projection image to which a black border area is added. In this application, black border detection is performed on a display image of the mobile phone, that is, black border detection is performed on a projection image to which no black border area is added. In this way, areas on which black border detection is performed can be reduced, which helps improve detection efficiency.

Difference 3: In the known technology, the mobile phone does not need to send black border data to the large screen. In this application, the mobile phone needs to send the black border data to the large screen, so that the large screen directly receives the black border data and performs cropping based on the black border data, to obtain a finally displayed projection image.

Based on the foregoing technical solution, the first device and the second device determine, based on the computing performance parameters, the target device used to compute the black border data, so that a computing capability of the selected target device is high. In this way, duration of computing the black border data is shortened, and black border detection efficiency is improved, so that an image can be quickly displayed after being projected, thereby improving user experience. For example, if the target device is the first device, the first device computes the black border data based on the first projection image, and sends the black border data to the second device, so that the second device performs cropping. Compared with that the second device directly performs black border detection on the first projection image to obtain the black border data, this helps shorten duration and improve detection efficiency. In addition, in a multi-channel projection scenario, whether the second device has performed black border detection is preferentially considered, which helps alleviate a problem of low detection efficiency caused by performing black border detection on a plurality of channels of projection images by the second device. In other words, the computing capability of the first device is fully used, which helps improve black border detection efficiency.

It should be understood that the steps in the foregoing methods may be completed by using a hardware integrated logic circuit or instructions in a form of software in a processor. The steps of the methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with the hardware of the processor. To avoid repetition, details are not described herein again.

This application further provides an electronic device. The electronic device may include a memory and a processor. The memory may be configured to store a computer program. The processor may be configured to invoke the computer program in the memory, so that the electronic device performs the method performed by the first device or the method performed by the second device in any one of the embodiments shown in FIG. 5 to FIG. 8.

This application further provides a chip system. The chip system includes at least one processor, configured to implement the method in any one of embodiments shown in FIG. 5 to FIG. 8, for example, receive or process data and/or information in the foregoing methods.

In a possible design, the chip system further includes a memory, the memory is configured to store program instructions and data, and the memory is located inside or outside the processor.

The chip system may include a chip, or may include a chip and another discrete component.

This application further provides a computer program product. The computer program product includes a computer program (which may also be referred to as code or instructions). When the computer program is run, an electronic device performs the method in any one of the embodiments shown in FIG. 5 to FIG. 8.

This application further provides a computer-readable storage medium. The computer-readable storage medium stores a computer program (which may also be referred to as code or instructions). When the computer program is run, an electronic device performs the method in any one of the embodiments shown in FIG. 5 to FIG. 8.

This application further provides a communication system, including the first device and the second device described above.

It should be noted that the processor in embodiments of this application may be an integrated circuit chip, and has a signal processing capability. In an implementation process, the steps in the foregoing method embodiments may be completed by using a hardware integrated logic circuit or instructions in a form of software in the processor. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the methods disclosed with reference to embodiments of this application may be directly performed by a hardware decoding processor, or may be performed by using a combination of hardware in a decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

Terms such as "unit" and "module" used in this specification may indicate computer-related entities, hardware, firmware, combinations of hardware and software, software, or software being executed.

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. In several embodiments provided in this application, it should be understood that the disclosed apparatuses, devices, and methods may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings, direct couplings, or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

In the foregoing embodiments, all or some of the functions of the functional units may be implemented by using software, hardware, firmware, or any combination thereof. When software is used to implement the embodiments, all or a part of embodiments may be implemented in a form of a computer program product. The computer program product includes one or more computer instructions (programs). When the computer program instructions (programs) are loaded and executed on a computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or may include a data storage device, for example, a server or a data center, integrating one or more usable media. The usable medium may be a magnetic medium (for example, a floppy disk, a hard disk drive, or a magnetic tape), an optical medium (for example, a digital video disc (digital video disc, DVD)), or a semiconductor medium (for example, a solid-state disk (solid-state disk, SSD)).

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A projection image processing method, applied to a first device, wherein the method comprises:
determining, from the first device and a second device based on a computing performance parameter of the first device and a computing performance parameter received from the second device, a target device used to compute black border data, wherein the second device is configured to perform projection display on a projection image from the first device, the computing performance parameter of the first device indicates a computing capability of the first device, and the computing performance parameter of the second device indicates a computing capability of the second device;
when the target device is the first device, computing the black border data based on a first projection image, wherein the first projection image is a projection image to be displayed on the second device, and the black border data indicates a black border area in the first projection image; and
sending the first projection image and the black border data to the second device.

2. The method according to claim 1, wherein the sending the first projection image and the black border data to the second device comprises:
sending the first projection image and the black border data to the second device through a transport stream.

3. The method according to claim 1 or 2, wherein the first projection image is obtained based on a display image of the first device;
before the computing the black border data based on a first projection image, the method further comprises:
performing black border detection on the display image to obtain a black border detection result, wherein the black border detection result indicates a black border area in the display image; and
the computing the black border data based on a first projection image comprises:
obtaining the black border data through computing based on the black border detection result and a display ratio or a resolution of the first projection image.

4. The method according to any one of claims 1 to 3, wherein before the determining, from the first device and a second device based on a computing performance parameter of the first device and a computing performance parameter received from the second device, a target device used to compute black border data, the method further comprises:
receiving first information from the second device, wherein the first information indicates whether the second device has performed black border detection; and
determining, based on the first information, that the second device has not performed black border detection.

5. The method according to any one of claims 1 to 4, wherein the determining, from the first device and a second device based on a computing performance parameter of the first device and a computing performance parameter received from the second device, a target device used to compute black border data comprises:
if the computing capability of the first device is higher than that of the second device, determining that the first device is the target device; or
if the computing capability of the second device is higher than that of the first device, determining that the second device is the target device.

6. The method according to any one of claims 1 to 5, wherein when the target device is the second device, the method further comprises:
sending the first projection image to the second device, and skipping sending the black border data.

7. A projection image processing method, applied to a second device, wherein the method comprises:
determining, from a first device and the second device based on a computing performance parameter of the second device and a computing performance parameter received from the first device, a target device used to compute black border data, wherein the second device is configured to perform projection display on a projection image from the first device, the computing performance parameter of the first device indicates a computing capability of the first device, and the computing performance parameter of the second device indicates a computing capability of the second device; and
when the target device is the first device, receiving a first projection image and the black border data that are from the first device, wherein the black border data is obtained by the first device through computing based on the first projection image, the black border data indicates a black border area in the first projection image, and the first projection image is a projection image to be displayed on the second device.

8. The method according to claim 7, wherein the receiving a first projection image and the black border data that are from the first device comprises:
receiving the first projection image and the black border data through a transport stream.

9. The method according to claim 7 or 8, wherein the method further comprises:
when a display image of the second device comprises a plurality of projection images, determining whether the second device has performed black border detection; and
the determining, from a first device and the second device based on a computing performance parameter of the second device and a computing performance parameter received from the first device, a target device used to compute black border data comprises:
when determining that the second device has not performed black border detection, determining, from the first device and the second device based on the computing performance parameter of the second device and the computing performance parameter received from the first device, the target device used to compute the black border data.

10. The method according to claim 9, wherein the method further comprises:
sending first information to the first device, wherein the first information indicates whether the second device has performed black border detection.

11. The method according to any one of claims 7 to 10, wherein the determining, from a first device and the second device based on a computing performance parameter of the second device and a computing performance parameter received from the first device, a target device used to compute black border data comprises:
if the computing capability of the first device is higher than that of the second device, determining that the first device is the target device; or
if the computing capability of the second device is higher than that of the first device, determining that the second device is the target device.

12. The method according to any one of claims 7 to 11, wherein when the target device is the second device, the method further comprises:
receiving the first projection image from the first device; and
performing black border detection on the first projection image to obtain the black border data.

13. The method according to any one of claims 7 to 12, wherein the method further comprises:
cropping the first projection image based on the black border data, to obtain and display a cropped projection image.

14. A projection image processing apparatus, comprising a processor and a memory, wherein
the memory is configured to store a computer program; and
the processor is configured to invoke the computer program, for the apparatus to perform the method according to any one of claims 1 to 6, or perform the method according to any one of claims 7 to 13.

15. A computer-readable storage medium, wherein the storage medium stores a computer program or instructions; and when the computer program or instructions are executed by a computer, the method according to any one of claims 1 to 6 or the method according to any one of claims 7 to 13 is implemented.

16. A computer program product, wherein the computer program product comprises instructions; and when the instructions are run by a computer, the method according to any one of claims 1 to 6 or the method according to any one of claims 7 to 13 is implemented.

17. A program product, wherein the program product comprises a computer program, the computer program is stored in a readable storage medium, at least one processor of a communication apparatus can read the computer program from the readable storage medium, and the at least one processor executes the computer program, for the communication apparatus to implement the method according to any one of claims 1 to 6 or the method according to any one of claims 7 to 13.
